# EUROPEAN PATENT SPECIFICATION

(11) **EP 4 456 092 B1**
(45) Date of publication and mention of the grant of the patent: **09.09.2026**
(21) Application number: 22909512.0
(22) Date of filing: 28.10.2022
(51) Int. Cl.: B29C 48/154, B29C 48/505, B29C 48/64, B29C 48/34, B29C 48/92, B29C 48/80, H01B 3/44, H01B 13/14, B29C 48/49, B29C 48/21, B29C 48/06, H01B 13/24, B29C 48/25, B29C 48/285, B29L 31/34

(54) **METHOD FOR MANUFACTURING POLYPROPYLENE INSULATED CABLE**
VERFAHREN ZUR HERSTELLUNG EINES MIT POLYPROPYLEN ISOLIERTEN KABELS
PROCÉDÉ DE FABRICATION DE CÂBLE ISOLÉ PAR POLYPROPYLÈNE

(30) Priority: 22.12.2021 CN 202111582953
(43) Date of publication of application: 30.10.2024
(73) Proprietor: Zhongtian Technology Submarine Cable Co., Ltd., Nantong, Jiangsu 226000 (CN)
(72) Inventor: ZHANG, Weidong, Nantong, Jiangsu 226000 (CN); MIAO, Shuangshuang, Nantong, Jiangsu 226000 (CN); FENG, Yongsheng, Nantong, Jiangsu 226000 (CN); HOU, Hongjian, Nantong, Jiangsu 226000 (CN); DING, Jiye, Nantong, Jiangsu 226000 (CN); CUI, Zhichao, Nantong, Jiangsu 226000 (CN); MA, Jianfeng, Nantong, Jiangsu 226000 (CN)
(74) Representative: PPR AG
(86) International application number: PCT/CN2022/128190
(87) International publication number: WO 2023/116194

(56) References cited:
- CN-A- 104 260 306
- CN-A- 106 938 530
- CN-A- 107 680 734
- CN-A- 108 437 400
- CN-A- 111 152 436
- CN-A- 114 038 633
- DE-A1- 2 921 943
- JP-A- 2001 135 175
- JP-A- 2018 032 495
- JP-A- H06 231 634
- JP-A- S 525 484
- JP-U- S5 233 674
- US-A- 4 778 543
- US-A1- 2021 118 595
- US-B2- 8 853 327

## Description

### TECHNICAL FIELD

The present application relates to the technical field of power cable processing and, in particular, to a manufacturing method for a polypropylene insulated cable.

### BACKGROUND

Power cables are cable products for transmission and distribution of high-power electric energy in main lines of a power system, and are usually used in urban underground power grids, leading-out lines of power stations, internal power supply of industrial and mining enterprises and underwater power transmission lines across rivers and seas, so they require good insulation performance. Insulation layer is an insulation protective heat-shrinkable casing commonly used on a cable.

At present, in domestic power systems, medium-voltage power cables usually use a cross-linked polyethylene (PE) material as an insulation layer. With the gradual improvement of social requirements for environmental protection, and taking into account the recycling of the insulation layer of the cable, it is necessary to develop polypropylene (PP) to replace polyethylene (PE) as an insulating material. However, original extruders and manufacturing methods for producing the insulation layer cannot meet the requirements of producing an insulation layer of a cable using a polypropylene material, and are easy to have problems such as poor plasticization and blocking a discharge port.

Therefore, it is urgent to develop a plastic extruder and a manufacturing method for a polypropylene insulated cable, which can meet the requirements of preparing an insulation layer of a cable using a polypropylene material.

US8853327B2 discloses a process for preparing a blend of thermoplastic polymer and resin modifier within a single-screw extruder, wherein therein modifier is a hydrocarbon resin.

CN106938530A discloses a special extrusion screw for heat-resistant polyethylene and an extrusion method thereof. The screw includes a feeding section, a compression section, a first metering section, a decompression section, a second metering section, a mixing section, and a screw head, which are connected in sequence.

CN108437400A discloses a two-stage seven-section high-rotation-speed and high-yield PP extrusion screw, which is sequentially provided with a feeding section, a compression section, a first metering section, a shearing section, a decompression section, a second metering section and a polyhedral mixing section along the direction from the feeding end to the screw head.

JPH06231634A discloses a conductor core wire extrusion coating device for homogenizing the extrusion coating resin of a cable extrusion coating machine.

CN111152436A discloses an environment-friendly stone paper extrusion molding screw, which comprises a shaft part, a connecting handle arranged at one end of the shaft part for connecting to extrusion equipment, and threads arranged on the shaft part, wherein a pressure-stabilizing section is arranged on the screw.

JP2018032495A discloses a method for manufacturing a conductor core wire, which is used to produce a conductor core wire 20 having an inner sheath 11 and an outermost sheath 12. The inner sheath 11 contains a silane crosslinking catalyst, and the outermost sheath 12 contains a greater amount of silane crosslinking catalyst than the inner sheath 11.

JPS525484A discloses a manufacturing method for a plastic-sheathed communication cable. The communication cable is provided with an inner-layer plastic 5, which is used to make the interface between the cable core composed of longitudinally wrapped metal shielding tape 2 on the communication cable core group 1 and the outer-layer plastic 4 extruded and coated on the outside thereof fit closely with each other.

JPS5233674U discloses an extrusion coating device, which is structurally characterized in that each injection pipe of the extruder with two injection pipes is respectively connected to the above-mentioned internal flow channel and external flow channel; meanwhile, the injection pipe of the extruder with one injection pipe is connected to the above-mentioned intermediate flow channel.

JP2001135175A discloses a wire coating extrusion device, which reduces the required labor cost when replacing the color of the coloring material for coating the wire.

DE2921943A1 discloses a wire coating extrusion device, which reduces the required labor cost when replacing the color of the coloring material for coating the wire.

US2021118595A1 discloses a process for the manufacture of an electric cable comprising an extruded thermoplastic layer obtained from a composition comprising at least one dielectric liquid and at least one thermoplastic polymer chosen from a propylene homopolymer and copolymer, and also toa cable obtained by said process.

### SUMMARY

The present application provides a plastic extruder and a manufacturing method for a polypropylene insulated cable, which are used to at least solve the problems of poor plasticization and blocking a discharge port that tend to occur during preparation of an insulation layer of a cable by using a polypropylene material, and thus meet the requirements for preparing the insulation layer of the cable. The present invention is set out in the appended set of claims.

In order to achieve the above objective, the present application provides a plastic extruder, which includes a plastic extruder body, the plastic extruder body includes a main body and a heating device, where the heating device is disposed on an outer side the main body, and the heating device is used to heat the main body so that a temperature of the main body is greater than or equal to 300°C; and
the main body is internally provided with a material cavity, and a screw is rotatably disposed in the material cavity, and the screw includes a feeding section, a compression section and a homogenization section, which are sequentially connected, where the feeding section, the compression section and the homogenization section are all provided with threads, and the threads of the compression section are double threads, and a length of the compression section accounts for 55% to 65% of a sum of lengths of the feeding section, the compression section and the homogenization section.

In the plastic extruder provided in the present application, setting the heating device to heat the main body to enable the temperature of the main body to be greater than or equal to 300°C may meet a requirement of melting a high-melting-point material, and meanwhile setting the length of the compression section to account for 55% to 65% of the sum of the lengths of the feeding section, the compression section and the homogenization section may ensure the plasticization degree of the material, thereby improving the quality of extrusion. The plastic extruder provided in the present application may use polypropylene as a material, which can be applied to a preparation requirement for using polypropylene as an insulation layer of a cable, and solve the problems of the polypropylene material tending to block the discharge port in the extrusion process, as well as poor plasticization, aging and the like.

In a possible implementation, a ratio of a length to an outer diameter of the screw is S, where 28 ≤ S ≤ 30.

In a possible implementation, the heating device is a heating tile disposed on an outer wall of the material cavity, and a heating power of the heating tile is 14 kW.

In a possible implementation, the main body is connected with a feed hopper and a neck, both of which are communicated with the material cavity, and the feed hopper is located at an upper side of the feeding section, the neck is located at a side of the homogenization section away from the compression section, the neck has a discharge port, and the discharge port is provided with a temperature detection device.

In a possible implementation, the plastic extruder further includes a frame, a slide rail is disposed on the frame, and the plastic extruder body moves along the slide rail towards a direction close to or away from the head.

The present application further provides a manufacturing method for a polypropylene insulated cable by using an extrusion system including the above plastic extruder, the extrusion system further including first extrusion equipment, second extrusion equipment and a head, and the method includes:
processing a material for preparing an inner shielding layer into an inner shielding layer material in a molten state by using the first extrusion equipment;
processing a material for preparing an outer shielding layer into an outer shielding layer material in a molten state by using the second extrusion equipment;
processing a material for preparing an insulating layer into an insulating material in a molten state by using the above plastic extruder, where the head and the main body of the plastic extruder are in a separated state;
providing a metal conductor wire formed by stranding and causing the metal conductor wire to be in a transport state in the head;
connecting a neck of the main body with the head after the insulating material in a molten state discharged from a discharge port of the main body is stable, so that the discharge port is communicated with an inlet position of the head;
in a state in which the discharge port is communicated with the inlet position of the head, extruding the insulating material in a molten state, the inner shielding layer material in a molten state and the outer shielding layer material in a molten state together onto a periphery of the metal conductor wire in a transport state where the inner shielding layer material in a molten state is wrapped around outside of the metal conductor wire to form the inner shielding layer, the insulating material in a molten state is wrapped around outside of the inner shielding layer to form the insulating layer, and the outer shielding layer material in a molten state is wrapped around outside of the insulating layer to form the outer shielding layer;
filling the metal conductor wire wrapped with the insulating layer to form a cable;
wrapping and tying the cable formed after filling to form an inner sheath layer of the cable;
spirally armoring the cable formed with the inner sheath layer with a gap formed by spirally armoring the cable to form an armoring layer; and
extruding an outer sheath layer onto a periphery of the cable formed with the armoring layer by using third extrusion equipment.

In a manufacturing method for a polypropylene insulated cable provided in the present application, the inner shielding layer, the insulating layer and the outer shielding layer are processed by three-layer co-extrusion, which results in good concentricity, and also enables a tight connection between the insulating layer and the metal conductor wire, which is beneficial to improving the mechanical performance and service life of the cable. In addition, the material for preparing the insulating layer is a polypropylene material, and compared with a polyethylene material, the polypropylene material not only may eliminate the processes of degassing and crosslinking, which simplifies the production processes and improves the production efficiency, but also may reduce a thickness of the prepared insulating layer, which can still meet the use requirement of the cable, and significantly improve the insulating performance of the insulating layer and the mechanical performances before and after aging, and thus is more effectively applied to the production of polypropylene insulated alternating current and direct current cables.

In a possible implementation, the processing the material for preparing an insulating layer into the insulating material in a molten state by using the above plastic extruder includes:
heating the material cavity to a preset temperature, and adding the insulating material into the material cavity, so that the insulating material becomes the insulating material in a molten state; and
increasing a rotating speed of the screw in the plastic extruder to a preset speed, so that the screw pushes the insulating material in a molten state to move toward the discharge port.

In a possible implementation, before adding the insulating material into the material cavity, the manufacturing method further includes:
standing the insulating material for more than or equal to 24 hours.

In a possible implementation, the insulating material is polypropylene.

In a possible implementation, the preset temperature is 170°C to 190°C; and the preset speed is 19 rpm to 22 rpm.

In the plastic extruder and the manufacturing method for a polypropylene insulated cable, the temperature detection device is used to detect the temperature of the material discharged through the discharge port, which solves the problem of large deviation in temperature measurement, and ensures the control of an actual temperature in extrusion.

In the plastic extruder provided in the present application, the heating device is a heating tile, the heating tile is disposed on an outer wall of the material cavity, a heating power of the heating tile is 14 kW, which meets a heat demand for material melting, and can meet a requirement of using the polypropylene material that has a large specific heat capacity and needs to absorb a large amount of melting heat.

In the manufacturing method for a polypropylene insulated cable provided in the present application, a thickness of the insulation layer of the cable prepared by using polypropylene as the insulating material may be thinned, and the insulation layer of the polypropylene cable with thinned thickness has passed a series of related tests such as mechanical property test before and after aging, partial discharge test and withstand voltage test, and meets the relevant test requirements.

In addition to the technical problems solved by the embodiments of the application described above, the technical features constituting the technical solutions and the beneficial effects brought by the technical features of these technical solutions, Other technical problems that can be solved by the plastic extruder and the manufacturing method of a polypropylene insulated cable provided in the embodiments of the present application, other technical features contained in the technical solutions and the beneficial effects brought by these technical features will be further illustrated in detail in the specific embodiments.

### BRIEF DESCRIPTION OF DRAWINGS

In order to more clearly explain technical solutions in the present application or the prior art, the drawings to be used in the description of the embodiments or the prior art will be briefly introduced below. Obviously, the drawings in the following description are only some embodiments of the present application, and other drawings may be obtained by those of ordinary skill in the art based on these drawings without creative labor.
FIG. 1 is a schematic structural diagram of a plastic extruder and a head provided in an embodiment of the present application.
FIG. 2 is a three-dimensional schematic structural diagram of a main body of a plastic extruder provided in an embodiment of the present application.
FIG. 3 is another three-dimensional schematic structural diagram of a main body of a plastic extruder provided in an embodiment of the present application.
FIG. 4 is a three-dimensional schematic structural diagram of a screw of a plastic extruder provided in an embodiment of the present application.
FIG. 5 is a front view of a screw of a plastic extruder provided in an embodiment of the present application.
FIG. 6 is a schematic structural diagram of an extrusion system used in a manufacturing method for a polypropylene insulated cable provided in the embodiment of the present application.
FIG. 7 is a partial schematic structural diagram of an extrusion system used in a manufacturing method for a polypropylene insulated cable provided in an embodiment of the present application.
FIG. 8 is a flow chart of a manufacturing method for a polypropylene insulated cable provided in an embodiment of the present application.
FIG. 9 is a partial flow chart of a manufacturing method for a polypropylene insulated cable provided in an embodiment of the present application.

Description of reference numerals:
10- plastic extruder body;
11- main body;
111- material cavity;
112- feed channel;
12- heating device;
13- feed hopper;
14- screw;
141- feeding section;
142- compression section;
143- homogenization section;
15- temperature detection device;
16- neck;
17- driving mechanism;
171- motor;
172- reducer;
173- coupling;
18- walking mechanism;
19- protective cover;
20- frame;
30- slide rail;
40- head;
50- first extrusion equipment;
60- second extrusion Equipment.

### DETAILED DESCRIPTION

In order to make the purposes, technical solutions and advantages of the present application clearer, the technical solutions in the present application will be described clearly and comprehensively in combination with the drawings in the present application. Obviously, the described embodiments are some of the embodiments of the present application, but not all of them. Based on the embodiments in the present application, all other embodiments acquired by those of ordinary skill in the art without creative work shall fall within the protection scope of the present application.

In the related technology, a polyethylene material is used to produce an insulation layer of a cable, and a temperature of producing a polyethylene insulation layer is 150°C. Compared with the insulation layer of the cable produced by the polyethylene material, the insulation layer of the cable produced by using polypropylene material can meet the requirements for cable operating at a high temperature, and has a high breakdown strength and volume resistivity, which is of great significance to improving the operating voltage level and the line current carrying capacity of the cable, and the use of the polypropylene material is more environmentally friendly.

Since the polypropylene material has a low thermal conductivity, high melting point, high extrusion temperature, good fluidity at the melting temperature, and good formability, when a plastic extruder for preparing an insulation layer of a cable using a polyethylene material is directly used to produce an insulation layer of a cable using a polypropylene material on basis of the above differences, it cannot meet the production requirement, and problems such as blocking discharge port, poor plasticization and aging are easy to occur, which affects the quality of the produced polypropylene insulation layer.

In view of the above background, a plastic extruder and a manufacturing method for a polypropylene insulated cable provided in the present application can meet the preparation requirement for using polypropylene material as an insulation layer of a cable, which solves the problems such as the polypropylene material tending to block the discharge port in the extrusion process, poor plasticization, aging and the like.

The plastic extruder and the manufacturing method for the polypropylene insulated cable provided in the embodiments of the present application are described below with reference to the drawings.

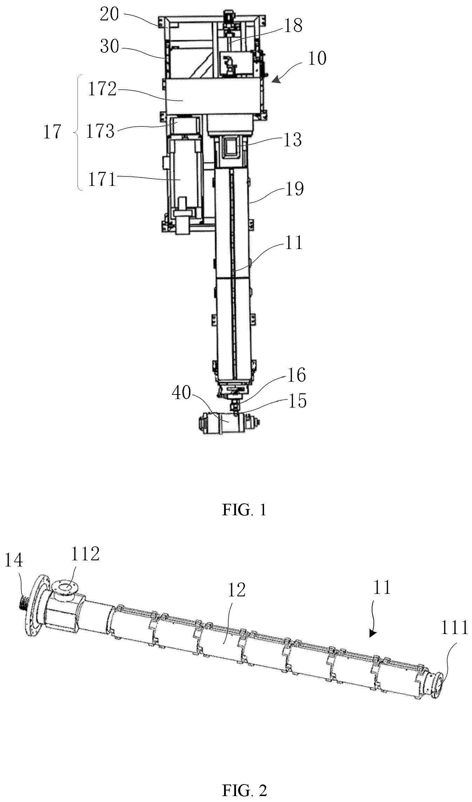

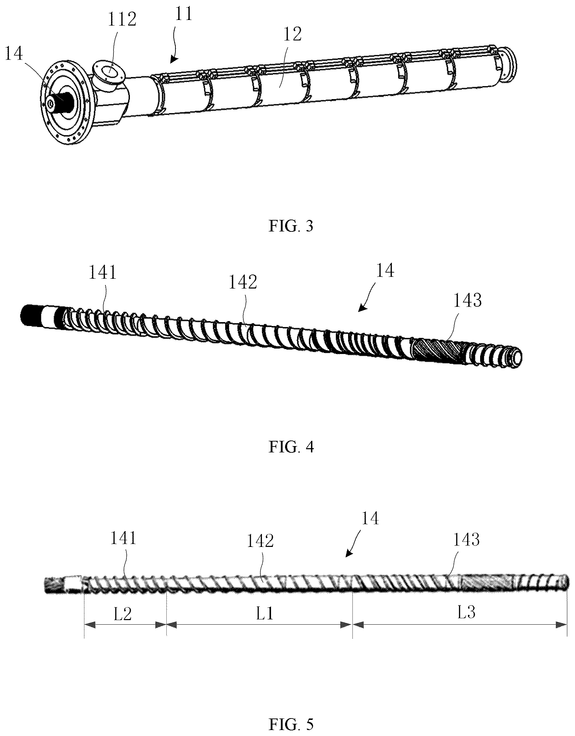

Referring to FIG. 1, the present application provides a plastic extruder for polypropylene as a production material, including a plastic extruder body 10. Referring to FIGS. 2 and 3, the plastic extruder body 10 includes a main body 11 and a heating device 12, the heating device 12 is disposed on an outer side of the main body 11 and it is used to heat the main body 11 so that a temperature of the main body 11 is greater than or equal to 300°C.

The main body 11 is internally provided with a material cavity 111, and a screw 14 is rotatably disposed in the material cavity 111. Referring to FIGS. 4 and 5, the screw 14 includes a feeding section 141, a compression section 142 and a homogenization section 143, which are sequentially connected. The feeding section 141, the compression section 142 and the homogenization section 143 are all provided with threads, and the threads of the compression section 142 are double threads, and a length of the compression section 142 accounts for 55% to 65% of a sum of lengths of the feeding section 141, the compression section 142 and the homogenization section 143.

In the plastic extruder provided in the present application, the main body 11 being heated by the heating device 12 to enable the temperature of the main body 11 to be greater than or equal to 300°C may meet a melting requirement of a high-melting-point material, and meanwhile setting the length of the compression section 142 to account for 55% to 65% of the sum of the lengths of the feeding section 141, the compression section 142 and the homogenization section 143 may ensure a plasticization degree of the material, thereby improving the quality of extrusion. The plastic extruder provided in the present application may use polypropylene as a material, which can meet a preparation requirement of using polypropylene as the insulation layer of the cable, and solve the problems such as the polypropylene material being easy to block the discharge port in the extrusion process, poor plasticization, aging and the like.

Polypropylene has excellent insulation performance. Compared with a thickness of the insulation layer of the cable prepared using a crosslinked polyethylene, a thickness of the insulation layer of the cable prepared by using polypropylene as the insulating material may be reduced. In multi-batch and multi-frequency test verification, the insulation layer of the polypropylene cable with reduced thickness has passed a series of related tests such as mechanical property test before and after aging, partial discharge test and withstand voltage test, and all meet relevant test requirements.

Due to high extrusion temperature required by the polypropylene material, in the present application, the main body 11 is heated by the heating device 12, so that the temperature of the main body 11 is greater than or equal to 300°C, which meets required melting temperature of the polypropylene material, so that the plastic extruder provided in the present application may be suitable for production using polypropylene as a material, which can solve the problems such as the blocking of discharge port, poor plasticization and the like and ensure good production quality.

Referring to FIGS. 3 and 4, the screw 14 is rotatably disposed in the material cavity 111, and is used to push the material entered the material cavity 111, so that the material entered the material cavity 111 moves to a position close to the homogenization section 143.

The screw 14 includes a feeding section 141, a compression section 142 and a homogenization section 143, which are sequentially connected. The feeding section 141, the compression section 142 and the homogenization section 143 are all provided with threads, and the threads of the feeding section 141, the compression section 142 and the homogenization section 143 have the same helical direction. The feeding section 141 is used for compacting and transporting the material, and the transporting and compacting effect of the materials is realized through a friction between an inner wall of the material cavity 111 and a surface of the screw 14. A function of the compression section 142 is to further compact and plasticize the material, the material forms a high pressure in the compression section 142, and at the same time, it is heated from outside of the material cavity 111, and is strongly stirred, mixed and sheared by the screw 14 and then begins to melt, and thus a liquid phase of the material is continuously increasing and a solid phase thereof is continuously reducing. A function of the homogenizing section 143 is to further plasticize and homogenize the material, and make the material extruded at a constant pressure, a constant amount and a constant temperature.

Since the polypropylene material has a relatively large specific heat capacity, and needs to absorb a large amount of melting heat, the compression section 142 adopts a double thread, with a small spacing between threads, which is beneficial for the materials to fully contact with the screw 14 to receive the heat from the screw 14 for melting.

Referring to FIG. 5, a length of the feeding section 141 is L2, a length of the compression section 142 is L1, and a length of the homogenization section 143 is L3. The length of the compression section 142 accounts for 55% to 65% of a sum of the lengths of the feeding section 141, the compression section 142 and the homogenization section 143, that is, (L1+L2+L3)55% ≤ L1 ≤ (L1+L2+L3)65%. In a possible implementation, the length of the compression section 142 accounts for 55%, 58%, 60%, 62% or 65% of the sum of the lengths of the feeding section 141, the compression section 142 and the homogenization section 143. With this structure, duration for the polypropylene material to pass through the screw 14 is prolonged by 8% to 12%.

It is easy to be understood that if the length of the compression section 142 is too long, a problem of aging of the material may easily occur, which may affect the quality of the produced insulation layer; and if the length of the compression section 142 is too short, a problem of poor plasticization may easily occur, which may also affect the quality of the produced insulation layer. In this embodiment, the length of the compression section 142 is set to account for 55% to 65% of the sum of the lengths of the feeding section 141, the compression section 142 and the homogenization section 143, which can not only avoid the problem of aging of the material, but also can avoid the problem of poor plasticization, and ensures the stable quality of the produced insulating layer.

In a possible implementation, a ratio of a length to an outer diameter of the screw 14 is S, where 28 ≤ S ≤ 30.

It is easy to be understood that the larger the outer diameter of the screw 14, the more the heat is absorbed by the material through contact with the screw 14 in the process of transporting the material in the material cavity 111, which is beneficial to the melting of the material. The longer the length of the screw 14, the more the heat is absorbed and the longer the time for the material to contact the screw 14 in the process of transporting the material in the material cavity 111. However, too much heat absorbed by the material in the process of transporting the material in the material cavity 111 may affect the quality of the processed insulating layer. In this embodiment, by limiting the ratio S between the length and the outer diameter of the screw 14, it is possible to satisfy the demand for use of polypropylene material which has a large specific heat capacity and needs to absorb a large amount of melting heat, and at the same time to avoid the problem of aging of the polypropylene material, ensuring the quality of the produced insulating layer.

In a possible implementation, the ratio S of the length to the outer diameter of the screw 14 may be 28, 29 or 30. Sizes of the length and the outer diameter of the screw 14 are not specifically limited here, so long as the ratio of the length to the outer diameter of the screw 14 meets S.

In a possible implementation, the heating device 12 is a heating tile, the heating tile is disposed on an outer wall of the material cavity 111, a heating power of the heating tile is 14 kW, which meets the heat demand of material melting, and improves, compared with a heating tile with a heating power of 8 kW, the heating efficiency by 75%, meeting the requirement of using the polypropylene material that has a large specific heat capacity and needs to absorb a large amount of melting heat.

In a possible implementation, the main body 11 is in a cylindrical shape, and there may be a plurality of heating tiles, and the plurality of heating tiles are evenly and contiguously arranged around the outer wall of the material cavity 111, so as to ensure that the materials in the material cavity 111 are uniformly heated and that the material cavity 111 may receive heat transported by the heating tiles to a maximum extent. The number of the heating tiles is not specifically limited here, for example, the number of the heating tiles may be such as 6, 7 or 8.

In other possible implementations, the heating device 12 may also be other devices with a heat generation function, for example, a heater.

In a possible implementation, referring to FIGS. 1 and 2, the main body 11 is connected with a feed hopper 13 and a neck 16, both of which are communicated with the material cavity 111, and the feed hopper 13 is located on an upper side of the feeding section 141, and the neck 16 is located on a side of the homogenization section 143 away from the compression section 142. The neck 16 has a discharge port, and the discharge port is provided with a temperature detection device 15. The neck 16 is used for being detachably connected with a head 40.

The main body 11 has a feed channel 112, and the feed hopper 13 is connected to the feed channel 112 and is communicated with the material cavity 111 through the feed channel 112. The feed hopper 13 is used to add a material into the material cavity 111, and the material added into the feed hopper 13 enters the material cavity 111 through the feed channel 112, as shown in FIGS. 2 and 3, and under the action of the screw 14, the material is first transported to the compression section 142 through the feeding section 141, then transported to the homogenization section 143 to become a molten state, and then discharged through the discharge port of the neck 16. The temperature detection device 15 is used to detect a temperature of the material discharged through the discharge port.

In a possible implementation, the temperature detection device 15 is a melting temperature probe and/or a hand-held insertion probe thermometer. It is possible to use a combination of a melting temperature probe with a hand-held insertion probe thermometer, which may improve an accuracy of temperature measurement, solve the problem of large deviation in temperature measurement, and ensure the control of an actual temperature of extrusion.

In a possible implementation, referring to FIG. 1, the plastic extruder provided in the present application further includes a frame 20, on which a slide rail 30 is disposed, and the plastic extruder body 10 moves along the slide rail 30 in a direction close to or away from the head 40.

The frame 20 is fixed on the ground, and the movement of the plastic extruder body 10 is realized through the slide rail 30. After the material discharged from the discharge port of the neck 16 is stable, the plastic extruder body 10 moves along the slide rail 30 to be close to the head 40, and thus the neck 16 may be connected with the head 40, so that the material cavity 111 is communicated with the head 40, realizing the production of an insulation layer of a cable. The mechanism of the slide rail 30 is not specifically limited here, so long as the plastic extruder body 10 may move along the slide rail 30 in a direction close to or away from the head 40.

Referring to FIGS. 1 and 4, the plastic extruder further includes a driving mechanism 17, and the driving mechanism 17 includes a motor 171, a reducer 172 and a coupling 173. An output shaft of the motor 171 is connected with an input shaft of the reducer 172 through the coupling 173, and an output shaft of the reducer 172 is connected with one end of the screw 14 near the feeding section 141. The driving mechanism 17 is used to drive the screw 14 to rotate along its own circumferential direction.

In order to increase the use safety of the plastic extruder, the plastic extruder further includes a protective cover 19, and protective cover 19 covers the outside of the plastic extruder body 10 and has a distance from the heating device for sake of safety.

The plastic extruder further includes a traveling mechanism 18, and the traveling mechanism 18 is used to move the screw 14 along its own axial direction, so as to facilitate the installation and disassembly of the screw 14. For example, the traveling mechanism 18 may be a moving frame to support the screw 14 to move.

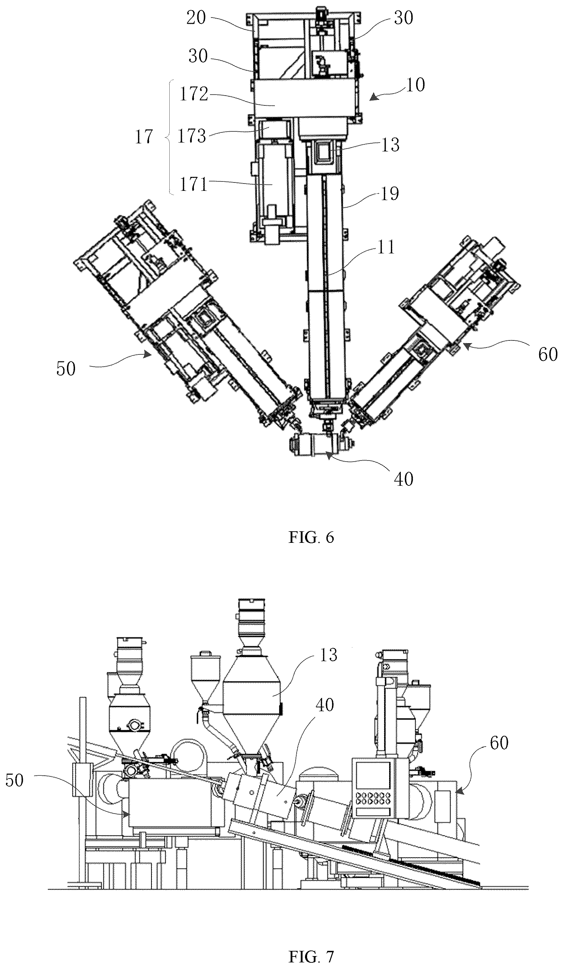

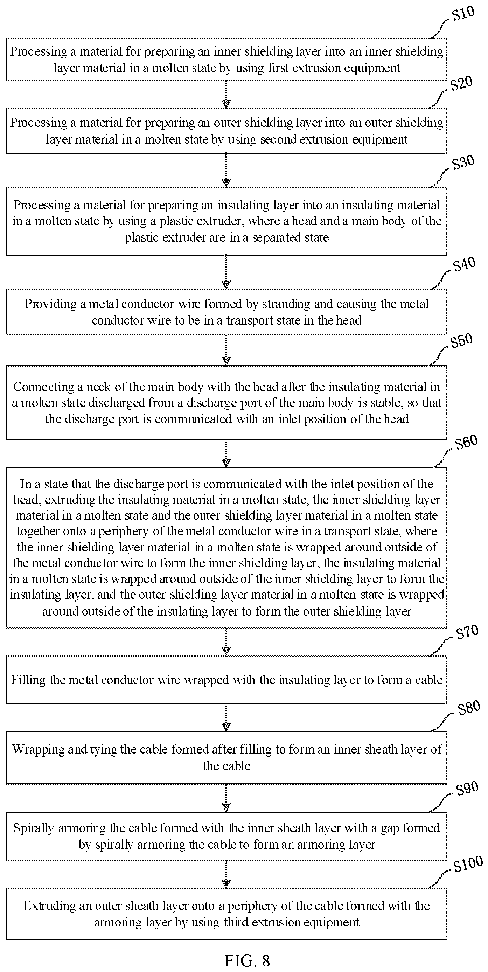

The present application also provides a manufacturing method for a polypropylene insulated cable by using an extrusion system including the above plastic extruder, and the extrusion system further includes first extrusion equipment 50, second extrusion equipment 60 and a head 40. Referring to FIGS. 6 and 8, the method includes:
S10, processing a material for preparing an inner shielding layer into an inner shielding layer material in a molten state by using the first extrusion equipment;
S20, processing a material for preparing an outer shielding layer into an outer shielding layer material in a molten state by using the second extrusion equipment;
S30, processing a material for preparing an insulating layer into an insulating material in a molten state by using the above plastic extruder, where the head and the main body of the plastic extruder are in a separated state;
S40, providing a metal conductor wire formed by stranding and causing the metal conductor wire to be in a transport state in the head;
S50, connecting a neck of the main body with the head after the insulating material in a molten state discharged from a discharge port of the main body is stable, so that the discharge port is communicated with an inlet position of the head;
S60, in a state that the discharge port is communicated with the inlet position of the head, extruding the insulating material in a molten state, the inner shielding layer material in a molten state and the outer shielding layer material in a molten state together onto a periphery of the metal conductor wire in a transport state, where the inner shielding layer material in a molten state is wrapped around outside of the metal conductor wire to form the inner shielding layer, the insulating material in a molten state is wrapped around outside of the inner shielding layer to form the insulating layer, and the outer shielding layer material in a molten state is wrapped around outside of the insulating layer to form the outer shielding layer;
S70, filling the metal conductor wire wrapped with the insulating layer to form a cable;
S80, wrapping and tying the cable formed after filling to form an inner sheath layer of the cable;
S90, spirally armoring the cable formed with the inner sheath layer with a gap formed by spirally armoring the cable to form an armoring layer; and
S100, extruding an outer sheath layer onto a periphery of the cable formed with the armoring layer by using third extrusion equipment.

In the manufacturing method for the polypropylene insulated cable provided in the present application, the inner shielding layer, the insulating layer and the outer shielding layer are processed by three-layer co-extrusion, which results in good concentricity, and also enables a tight connection between the insulating layer and the metal conductor wire, which is beneficial to improving the mechanical performance and service life of the cable. In addition, in the manufacturing method for a polypropylene insulated cable provided in the present application, a material for preparing an insulating layer is a polypropylene material, and compared with a polyethylene material, the polypropylene material may eliminate the processes of degassing and crosslinking, which simplifies the production processes and improves the production efficiency, but also may reduce a thickness of the prepared insulating layer, which can still meet the use requirement of the cable, and significantly improve the insulating performance of the insulating layer and the mechanical performances before and after aging, and thus is more effectively applied to the production of polypropylene insulated alternating current and direct current cables.

It is easy to be understood that, referring to FIGS. 6 and 7, the first extrusion equipment 50 is equipment for processing a material for preparing an inner shielding layer into a molten state, and the material for preparing the inner shielding layer is the inner shielding layer material; the second extrusion equipment 60 is equipment for processing a material for preparing an outer shielding layer into a molten state, and the material for preparing the outer shielding layer is the outer shielding layer material; and the above-mentioned plastic extruder is used to process the material for preparing the insulating layer into a molten state, the material for preparing the insulating layer is the insulating material, and may be a polypropylene material.

In a possible implementation, referring to FIGS. 6 and 8, Step S40 is providing a metal conductor wire formed by stranding and causing the metal conductor wire to be in a transport state in the head. In this step, the providing the metal conductor wire formed by stranding may be producing a stranded metal conductor wire by drawing a metal conductor into monofilament that meets a process requirement through drawing equipment, stranding the monofilament through stranding equipment and then molding it through a compacting die, where it may be that a plurality of monofilaments are stranded by the stranding equipment, and a cross section of the metal conductor wire formed by stranding may be in a circular shape.

In a possible implementation, the metal conductor wire may be a copper wire or an aluminum wire.

In a possible implementation, the metal conductor wire may be pulled by traction equipment, so that the metal conductor wire is in a transport state in the head 40.

Considering that at an initial stage of discharging the insulating material in a molten state from the discharge port, the smoothness and plasticization degree of the discharged insulating material in a molten state are not stable enough, which may affect the quality of the produced insulating layer of cable, for example, uneven material discharge and uneven surface of the produced insulating layer of cable, the neck 16 of the main body is not connected with the head 40 until the insulating material in a molten state discharged from the discharge port of the main body 11 is stable, so as to enable the discharge port to be communicated with an inlet position of the head 40, so that the quality of the insulating layer of cable extruded and molded by the head 40 is ensured.

In a possible implementation, the insulating material in a molten state discharged from the discharge port of the main body 11 being stable means that the smoothness and plasticization degree of the insulating material in a molten state discharged from the discharge port are stable, and the smoothness and plasticization degree of the insulating material in a molten state discharged from the discharge port may be judged according to experience by observation.

In a possible implementation, in Step S60, in a state that the discharge port is communicated with the inlet position of the head, extruding the insulating material in a molten state, the inner shielding layer material in a molten state and the outer shielding layer material in a molten state together onto a periphery of the metal conductor wire in a transport state may be implementing a three-layer co-extrusion processing of the inner shielding layer, the insulating layer and the outer shielding layer by transporting the inner shielding layer material in a molten state into the head 40 through the first extrusion equipment 50, transporting the outer shielding layer material in a molten state into the head 40 through the second extrusion equipment 60, and at the same time transporting the insulating material in a molten state into the head 40 through the above-mentioned plastic extruder.

In Step S70, the filling the metal conductor wire wrapped with the insulating layer to form a cable may be filling a gap formed between the monofilaments of the metal conductor wire with a high flame retardant filling material, for example, filling the gap with a high flame retardant filling rope.

In Step S80, wrapping and tying the cable formed after filling to form an inner sheath layer of the cable may be wrapping and tying the cable by using a wrapping tape, so that the cable is more compact.

In Step S90, spirally armoring the cable formed with the inner sheath layer with a gap formed by spirally armoring the cable to form an armoring layer may be armoring the cable by using two layers of galvanized steel tape with a gap formed by spirally armoring the cable. Since the steel tape has a certain rigidity, the inner sheath layer is disposed in order to avoid an internal structure of the cable from being damaged by the armoring layer, and a semi-conductive nylon belt may be used as a material of the inner sheath layer.

S100 is extruding an outer sheath layer onto a periphery of the cable formed with the armoring layer by using third extrusion equipment. It is easy to be understood that the third extrusion equipment is extrusion equipment suitable for producing the outer sheath layer.

In a possible implementation, the outer sheath layer may use a low-smoke zero halogen polyolefin material or polyvinyl chloride (PVC), and the outer sheath layer is used to prevent the armoring layer from erosion.

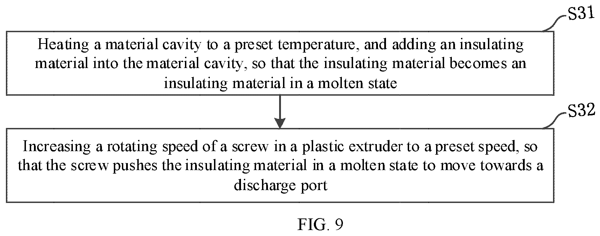

In a possible implementation, referring to FIGS. 8 and 9, S30, the processing a material for preparing an insulating layer into an insulating material in a molten state by using the above plastic extruder includes:
S31, heating the material cavity to a preset temperature and adding an insulating material into the material cavity so that the insulating material becomes an insulating material in a molten state; and
S32, increasing a rotating speed of the screw in the plastic extruder to a preset speed, so that the screw pushes the insulating material in a molten state to move towards the discharge port.

Step S31, heating the material cavity to a preset temperature and adding an insulating material into the material cavity so that the insulating material becomes an insulating material in a molten state may be heating an outer wall of the material cavity 111 by the heat from the heating device 12 to conduct the heat into the material cavity 111 and then melting, by the heat, the insulating material, which is added into the material cavity 111 through the feed hopper 13, to become a molten insulating material that may flow.

In a possible implementation, the preset temperature is 170°C to 190°C, which is increased by approximately 80% compared with a temperature of producing a crosslinked polyethylene insulating layer. Considering that there is a certain deviation between the preset temperature and an actual temperature, a temperature of the discharge port is detected in real time by the temperature detection device 15 to ensure the control of the actual temperature.

In a possible implementation, the preset temperature may be 170°C, 175°C, 180°C, 185°C or 190°C. When an initial temperature of the plastic extruder is set to be about 200°C, it can be seen through observation that the material is too soft and sticky and has serious aging problem; when the temperature is lowered to about 190°C, the material is improved; and when the temperature of the plastic extruder is continued to be adjusted to about 180°C, the discharged material has a smooth surface and is plasticized well. Through verification, the preset temperature of 170°C to 190°C for extrusion of the insulation material can meet a requirement of the extrusion process and improve the production quality.

Step S32, increasing a rotating speed of the screw in the plastic extruder to a preset speed may be gradually increasing the rotating speed of the screw to the preset speed.

In a possible implementation, the preset speed is 19 rpm to 22 rpm, which indicates number of rotations per minute of the screw 14, i.e., revolutions per minute, which is abbreviated as rpm.

In a possible implementation, the preset speed may be 19 rpm, 20 rpm, 21 rpm or 22 rpm.

In a possible implementation, before adding the insulating material into the material cavity, it further includes: standing the insulating material for more than or equal to 24 hours. The purpose of this step is to purify the insulating material, which is beneficial to improve the quality of the produced insulating layer.

In a possible implementation, the insulating material is polypropylene.

In a possible implementation, after the insulating material in a molten state discharged from the discharge port of the main body 11 is stable, and before the neck 16 of the main body 11 is connected with the head 40 to make the discharge port communicate with the inlet position of the head, it further includes installing a filter plate and continuing discharging for 15 min to 20 min, thereby further improving the stability of the discharged material.

In a possible implementation, the filter plate may be installed at the discharge port to filter out impurity therein.

In a possible implementation, the head 40 is heated by an oil-controlled mold temperature controller, a heating temperature of which may reach 300°C.

In a possible implementation, a temperature of the above plastic extruder is controlled at 200°C, a temperature of the first extrusion equipment 50 is controlled at 180°C, and a temperature of the head 40 is controlled at 200°C. This can effectively solve frequent problems of heavy odor, poor plasticization, aging, pits and the like.

In a manufacturing method for a polypropylene insulated cable provided in the present application, a three-layer co-extrusion process is used, which ensures that the processed product has high concentricity and eccentricity is controlled within 4%, improving a defect of eccentricity of the insulation layer of the cable and improving the smoothness of the surface of the insulation layer.

It should be noted here that the numerical values and numerical ranges involved in the present application are approximate values, and there may be a certain range of error due to influence of manufacturing processes, and the error may be considered negligible by those of skilled in the art.

In the description of the present application, it should be understood that orientations or positional relationships indicated by terms "center", "length" "width", "thickness", "top", "bottom", "upper", "lower", "left", "right", "front", "rear", "vertical", "horizontal", "inner", "outer", "axial" and "circumferential" and the like are based on orientations or positional relationships shown in the drawings, and are only for convenience of describing the present application and simplifying the description, and not to indicate or imply that the indicated position or element must have a particular orientation, be constructed or operated in a particular orientation, and therefore they cannot be understood as a limitation of the present application.

In addition, terms "first" and "second" are used only for descriptive purposes and cannot be understood to indicate or imply relative importance or implicitly indicated the number of technical features indicated. Therefore, a feature defined with "first", "second" may explicitly or implicitly include one or more such features. In the description of the present application, "a plurality of" means at least two, for example, two, three and the like, unless otherwise clearly and specifically limited.

In the present application, unless otherwise clearly specified and defined, terms "install", "connect with", "connect to", "fix" and the like should be understood in a broad sense, for example, it may be a fixed connection, may also be a detachable connection, or may be integrated; it may be a mechanical connection, and may be also an electrical connection or may be communicated with each other; it may be a direct connection, or an indirect connection through an intermediate medium, or may be communication within two elements or interaction between two elements. For those of ordinary skill in the art, the specific meanings of the above terms in the present application may be understood according to a specific situation.

In the present application, unless otherwise clearly specified and defined, a first feature being "above" or "below" a second feature may include the first feature being in direct contact with the second feature, or may include the first feature being not in direct contact with the second feature but through another feature(s) therebetween. Moreover, the first feature being "over", "above" and "on" the second feature includes the first feature being directly above and diagonally above the second feature, or simply indicates that a horizontal height of the first feature is higher than that of the second feature. The first feature being "under", "below" and "beneath" the second feature may be that the first feature is directly below and diagonally below the second feature, or only indicates that the horizontal height of the first feature is lower than that of the second feature.

## Claims

1. A manufacturing method for a polypropylene insulated cable by using an extrusion system comprising a plastic extruder, a first extrusion equipment, a second extrusion equipment and a head, the method comprising:
processing (S10) a material for preparing an inner shielding layer into an inner shielding layer material in a molten state by using the first extrusion equipment;
processing (S20) a material for preparing an outer shielding layer into an outer shielding layer material in a molten state by using the second extrusion equipment;
processing (S30) a material for preparing an insulating layer into an insulating material in a molten state by using the plastic extruder, wherein the head and the main body of the plastic extruder are in a separated state;
providing (S40) a metal conductor wire formed by stranding and causing the metal conductor wire to be in a transport state in the head;
connecting (S50) a neck of the main body with the head after the insulating material in a molten state discharged from a discharge port of the main body is stable, so that the discharge port is communicated with an inlet position of the head;
in a state that the discharge port is communicated with the inlet position of the head, extruding (S60) the insulating material in a molten state, the inner shielding layer material in a molten state and the outer shielding layer material in a molten state together onto a periphery of the metal conductor wire in a transport state, wherein the inner shielding layer material in a molten state is wrapped around outside of the metal conductor wire to form the inner shielding layer, the insulating material in a molten state is wrapped around outside of the inner shielding layer to form the insulating layer, and the outer shielding layer material in a molten state is wrapped around outside of the insulating layer to form the outer shielding layer;
filling (S70) the metal conductor wire wrapped with the insulating layer to form a cable;
wrapping and tying (S80) the cable formed after filling to form an inner sheath layer of the cable;
spirally armoring (S90) the cable formed with the inner sheath layer with a gap formed by spirally armoring the cable to form an armoring layer; and
extruding (S100) an outer sheath layer onto a periphery of the cable formed with the armoring layer by using third extrusion equipment;
wherein the plastic extruder comprises a plastic extruder body (10), the plastic extruder body (10) comprises a main body (11) and a heating device (12), the heating device (12) is disposed on an outer side the main body (11), and the heating device (12) is used to heat the main body (11) so that a temperature of the main body (11) is greater than or equal to 300°C; and
the main body (11) is internally provided with a material cavity (111), and a screw (14) is rotatably disposed in the material cavity (111), and the screw (14) comprises a feeding section (141), a compression section (142) and a homogenization section (143), which are sequentially connected, the feeding section (141), the compression section (142) and the homogenization section (143) are all provided with threads, and the threads of the compression section (142) are double threads, and a length (L2) of the compression section (142) accounts for 55% to 65% of a sum of lengths of the feeding section (141), the compression section (142) and the homogenization section (143);
wherein the main body (11) is connected with a feed hopper (13) and a neck (16), both of which are communicated with the material cavity (111), and the feed hopper (13) is located at an upper side of the feeding section (141), the neck (16) is located at a side of the homogenization section (143) away from the compression section (142), the neck (16) has a discharge port, and the discharge port is provided with a temperature detection device (15);
wherein the plastic extruder further comprises a frame (20), wherein a slide rail (30) is disposed on the frame (20), and the plastic extruder body (10) moves along the slide rail (30) towards a direction close to or away from the head (40).

2. The manufacturing method according to claim 1, wherein a ratio of a length to an outer diameter of the screw (14) is S, where 28 ≤ S ≤ 30.

3. The manufacturing method according to claim 1, wherein the heating device (12) is a heating tile disposed on an outer wall of the material cavity (111), and a heating power of the heating tile is 14 kW.

4. The manufacturing method according to claim 1, wherein the processing (S30) the material for preparing the insulating layer into the insulating material in a molten state by using the plastic extruder comprises:
heating (S31) the material cavity to a preset temperature, and adding the insulating material into the material cavity, so that the insulating material becomes the insulating material in a molten state; and
increasing (S32) a rotating speed of the screw in the plastic extruder to a preset speed, so that the screw pushes the insulating material in a molten state to move towards the discharge port.

5. The manufacturing method according to claim 1, wherein before adding the insulating material into the material cavity, the manufacturing method further comprises:
standing the insulating material for more than or equal to 24 hours.

6. The manufacturing method according to any one of claims 1, 4 and 5, wherein the insulating material is polypropylene.

7. The manufacturing method according to claim 4, wherein the preset temperature is 170°C to 190°C; and the preset speed is 19 rpm to 22 rpm.

## Patentansprüche

1. Verfahren zur Herstellung eines mit Polypropylen isolierten Kabels unter Benutzung eines Extrusionssystems, das einen Kunststoffextruder, eine erste Extrusionsausrüstung, eine zweite Extrusionsausrüstung und einen Kopf umfasst, wobei das Verfahren Folgendes umfasst:
Verarbeiten (S10) eines Materials zum Herstellen einer Innenabschirmungsschicht zu einem Innenabschirmungsschichtmaterial in einem geschmolzenen Zustand unter Benutzung der ersten Extrusionsausrüstung;
Verarbeiten (S20) eines Materials zum Herstellen einer Außenabschirmungsschicht zu einem Außenabschirmungsschichtmaterial in einem geschmolzenen Zustand unter Benutzung der zweiten Extrusionsausrüstung;
Verarbeiten (S30) eines Materials zum Herstellen einer Isolierschicht zu einem Isoliermaterial in einem geschmolzenen Zustand unter Benutzung des Kunststoffextruders, wobei der Kopf und der Hauptkörper des Kunststoffextruders in einem getrennten Zustand vorliegen;
Bereitstellen (S40) eines Metallleiterdrahts, der durch Verseilen ausgebildet wird, und Bewirken, dass der Metallleiterdraht in einem Transportzustand in dem Kopf vorliegt;
Verbinden (S50) eines Halses des Hauptkörpers mit dem Kopf, nachdem das Isoliermaterial in einem geschmolzenen Zustand, das aus einer Abgabeöffnung des Hauptkörpers abgegeben wird, stabil ist, sodass die Abgabeöffnung mit einer Einlassstelle des Kopfes in Verbindung steht;
in einem Zustand, in dem die Abgabeöffnung mit der Einlassstelle des Kopfes in Verbindung steht, Extrudieren (S60) des Isoliermaterials in einem geschmolzenen Zustand, des Innenabschirmungsschichtmaterials in einem geschmolzenen Zustand und des Außenabschirmungsschichtmaterials in einem geschmolzenen Zustand zusammen auf eine Peripherie des Metallleiterdrahts in einem Transportzustand, wobei das Innenabschirmungsschichtmaterial in einem geschmolzenen Zustand um eine Außenseite des Metallleiterdrahts gewickelt wird, um die Innenabschirmungsschicht auszubilden, das Isoliermaterial in einem geschmolzenen Zustand um eine Außenseite der Innenabschirmungsschicht gewickelt wird,
um die Isolierschicht auszubilden, und das Außenabschirmungsschichtmaterial in einem geschmolzenen Zustand um eine Außenseite der Isolierschicht gewickelt wird, um die Außenabschirmungsschicht auszubilden;
Füllen (S70) des Metallleiterdrahts, der mit der Isolierschicht umwickelt ist, um ein Kabel auszubilden;
Umwickeln und Verschnüren (S80) des Kabels, das nach dem Füllen ausgebildet vorliegt, um eine Innenmantelschicht des Kabels auszubilden;
spiraliges Bewehren (S90) des Kabels, das mit der Innenmantelschicht ausgebildet vorliegt, mit einem Spalt, der durch das spiralige Bewehren des Kabels ausgebildet wird, um eine Bewehrungsschicht auszubilden; und
Extrudieren (S100) einer Außenmantelschicht auf eine Peripherie des Kabels, das mit der Bewehrungsschicht ausgebildet vorliegt, unter Benutzung einer dritten Extrusionsausrüstung;
wobei der Kunststoffextruder einen Kunststoffextruderkörper (10) umfasst, der Kunststoffextruderkörper (10) einen Hauptkörper (11) und eine Heizvorrichtung (12) umfasst, die Heizvorrichtung (12) auf einer äußeren Seite des Hauptkörpers (11) angeordnet ist und die Heizvorrichtung (12) dazu benutzt wird, den Hauptkörper (11) zu erwärmen, sodass eine Temperatur des Hauptkörpers (11) höher als oder gleich 300 °C ist; und
der Hauptkörper (11) im Inneren mit einem Materialhohlraum (111) versehen ist und eine Schnecke (14) drehbar in dem Materialhohlraum (111) angeordnet ist und die Schnecke (14) einen Zuführabschnitt (141), einen Verdichtungsabschnitt (142) und einen Homogenisierungsabschnitt (143) umfasst, die aufeinanderfolgend miteinander verbunden sind, wobei der Zuführabschnitt (141), der Verdichtungsabschnitt (142) und der Homogenisierungsabschnitt (143) alle mit Gewinden versehen sind und die Gewinde des Verdichtungsabschnitts (142) Doppelgewinde sind und
eine Länge (L2) des Verdichtungsabschnitts (142) 55 % bis 65 % einer Summe der Längen des Zuführabschnitts (141), des Verdichtungsabschnitts (142) und des Homogenisierungsabschnitts (143) ausmacht;
wobei der Hauptkörper (11) mit einem Zuführtrichter (13) und einem Hals (16) verbunden ist, die beide mit dem Materialhohlraum (111) in Verbindung stehen, und der Zuführtrichter (13) sich an einer Oberseite des Zuführabschnitts (141) befindet, der Hals (16) sich an einer Seite des Homogenisierungsabschnitts (143), die von dem Verdichtungsabschnitt (142) entfernt ist, befindet, der Hals (16) eine Abgabeöffnung aufweist und
die Abgabeöffnung mit einer Temperaturerfassungsvorrichtung (15) versehen ist;
wobei der Kunststoffextruder ferner einen Rahmen (20) umfasst, wobei eine Laufschiene (30) an dem Rahmen (20) angeordnet ist und der Kunststoffextruderkörper (10) sich entlang der Laufschiene (30) hin zu einer Richtung nahe an den oder weg von dem Kopf (40) bewegt.

2. Herstellungsverfahren nach Anspruch 1, wobei ein Verhältnis einer Länge zu einem Außendurchmesser der Schnecke (14) S ist, wobei 28 ≤ S ≤ 30.

3. Herstellungsverfahren nach Anspruch 1, wobei die Heizvorrichtung (12) eine Heizplatte ist, die an einer Außenwand des Materialhohlraums (111) angeordnet ist, und eine Heizleistung der Heizplatte 14 kW beträgt.

4. Herstellungsverfahren nach Anspruch 1, wobei das Verarbeiten (S30) des Materials zum Herstellen der Isolierschicht zu dem Isoliermaterial in einem geschmolzenen Zustand unter Benutzung des Kunststoffextruders Folgendes umfasst:
Erwärmen (S31) des Materialhohlraums auf eine vorab festgelegte Temperatur und Einbringen des Isoliermaterials in den Materialhohlraum, sodass das Isoliermaterial das Isoliermaterial in einem geschmolzenen Zustand wird; und
Erhöhen (S32) einer Drehzahl der Schnecke in dem Kunststoffextruder auf eine vorab festgelegte Drehzahl, sodass die Schnecke Schub auf das Isoliermaterial in einem geschmolzenen Zustand ausübt, sodass dieses sich hin zu der Abgabeöffnung bewegt.

5. Herstellungsverfahren nach Anspruch 1, wobei vor dem Einbringen des Isoliermaterials in den Materialhohlraum, das Herstellungsverfahren ferner Folgendes umfasst:
Stehenlassen des Isoliermaterials für 24 Stunden oder länger.

6. Herstellungsverfahren nach einem der Ansprüche 1, 4 und 5, wobei das Isoliermaterial Polypropylen ist.

7. Herstellungsverfahren nach Anspruch 4, wobei die vorab festgelegte Temperatur 170 °C bis 190 °C beträgt und die vorab festgelegte Drehzahl 19 min⁻¹ bis 22 min⁻¹ beträgt.

## Revendications

1. Procédé de fabrication d'un câble isolé en polypropylène en utilisant un système d'extrusion comprenant une extrudeuse de plastique, un premier équipement d'extrusion, un deuxième équipement d'extrusion et une tête, le procédé comprenant :
le traitement (S10) d'un matériau pour préparer une couche de blindage interne en un matériau de couche de blindage interne à l'état fondu en utilisant le premier équipement d'extrusion ;
le traitement (S20) d'un matériau pour préparer une couche de blindage externe en un matériau de couche de blindage externe à l'état fondu en utilisant le deuxième équipement d'extrusion ;
le traitement (S30) d'un matériau pour préparer une couche isolante en un matériau isolant à l'état fondu en utilisant l'extrudeuse de plastique, dans lequel la tête et le corps principal de l'extrudeuse de plastique sont dans un état séparé ;
la fourniture (S40) d'un fil conducteur métallique formé par toronnage et de manière à ce que le fil conducteur métallique soit dans un état de transport dans la tête ;
la connexion (S50) d'un col du corps principal à la tête après que le matériau isolant à l'état fondu, évacué d'un orifice d'évacuation du corps principal, soit stabilisé, de sorte que l'orifice d'évacuation communique avec une position d'entrée de la tête ;
dans un état où l'orifice d'évacuation communique avec la position d'entrée de la tête, l'extrusion (S60) conjointe du matériau isolant à l'état fondu, du matériau de couche de blindage interne à l'état fondu et du matériau de couche de blindage externe à l'état fondu sur la périphérie du fil conducteur métallique dans un état de transport, dans lequel le matériau de couche de blindage interne à l'état fondu est enroulé autour de l'extérieur du fil conducteur métallique pour former la couche de blindage interne, le matériau isolant à l'état fondu est enroulé autour de l'extérieur de la couche de blindage interne pour former la couche isolante, et le matériau de couche de blindage externe à l'état fondu est enroulé autour de l'extérieur de la couche isolante pour former la couche de blindage externe ;
le remplissage (S70) du fil conducteur métallique enroulé avec la couche isolante pour former un câble ;
l'enroulement et le liage (S80) du câble formé après le remplissage pour former une couche de gaine interne du câble ;
l'armature en spirale (S90) du câble formé avec la couche de gaine interne avec un espace formé par la formation d'une armature en spirale du câble pour former une couche d'armature ; et
l'extrusion (S100) d'une couche de gaine externe sur une périphérie du câble formé avec la couche d'armure en utilisant un troisième équipement d'extrusion ;
dans lequel l'extrudeuse de plastique comprend un corps d'extrudeuse de plastique (10), le corps de l'extrudeuse de plastique (10) comprend un corps principal (11) et un dispositif de chauffage (12), le dispositif de chauffage (12) est disposé sur un côté externe du corps principal (11), et le dispositif de chauffage (12) est utilisé pour chauffer le corps principal (11) de sorte que la température du corps principal (11) soit supérieure ou égale à 300 °C ; et
le corps principal (11) est pourvu intérieurement d'une cavité de matériau (111), une vis (14) est disposée de manière rotative dans la cavité de matériau (111), et la vis (14) comprend une section d'alimentation (141), une section de compression (142) et une section d'homogénéisation (143), qui sont connectées séquentiellement, la section d'alimentation (141), la section de compression (142) et la section d'homogénéisation (143) sont toutes pourvues de filetages, et les filetages de la section de compression (142) sont des filetages doubles, et la longueur (L2) de la section de compression (142) représente entre 55 % et 65 % de la somme des longueurs de la section d'alimentation (141), de la section de compression (142) et de la section d'homogénéisation (143) ;
dans lequel le corps principal (11) est connecté à une trémie d'alimentation (13) et à un col (16), qui sont tous deux en communication avec la cavité de matériau (111), et la trémie d'alimentation (13) est située sur le côté supérieur de la section d'alimentation (141),
le col (16) est situé sur un côté de la section d'homogénéisation (143) éloigné de la section de compression (142), le col (16) comporte un orifice d'évacuation, et l'orifice d'évacuation est pourvu d'un dispositif de détection de température (15) ;
dans lequel l'extrudeuse de plastique comprend en outre un cadre (20), dans lequel un rail de glissement (30) est disposé sur le cadre (20), et le corps de l'extrudeuse de plastique (10) se déplace le long du rail de glissement (30) dans une direction de rapprochement ou d'éloignement de la tête (40).

2. Procédé de fabrication selon la revendication 1, dans lequel le ratio de la longueur par le diamètre externe de la vis (14) est S, où 28 ≤ S ≤ 30.

3. Procédé de fabrication selon la revendication 1, dans lequel le dispositif de chauffage (12) est une tuile chauffante disposée sur une paroi externe de la cavité de matériau (111), et la puissance de chauffage de la tuile chauffante est de 14 kW.

4. Procédé de fabrication selon la revendication 1, dans lequel le traitement (S30) du matériau pour préparer la couche isolante en ledit matériau isolant à l'état fondu en utilisant l'extrudeuse de plastique comprend :
le chauffage (S31) de la cavité de matériau à une température prédéfinie, et l'ajout du matériau isolant dans la cavité de matériau, de sorte que le matériau isolant devienne le matériau isolant à l'état fondu ; et
l'augmentation (S32) de la vitesse de rotation de la vis dans l'extrudeuse de plastique à une vitesse prédéfinie, de sorte que la vis pousse le matériau isolant à l'état fondu vers l'orifice d'évacuation.

5. Procédé de fabrication selon la revendication 1, dans lequel, avant l'ajout du matériau isolant dans la cavité de matériau, le procédé de fabrication comprend en outre :
le repos du matériau isolant pendant une durée supérieure ou égale à 24 heures.

6. Procédé de fabrication selon l'une quelconque des revendications 1, 4 et 5, dans lequel le matériau isolant est du polypropylène.

7. Procédé de fabrication selon la revendication 4, dans lequel la température prédéfinie est comprise entre 170 °C et 190 °C ; et la vitesse prédéfinie est comprise entre 19 tr/min et 22 tr/min.
